# EUROPEAN PATENT SPECIFICATION

(11) **EP 3 574 031 B1**
(45) Date of publication and mention of the grant of the patent: **27.12.2023**
(21) Application number: 17808287.1
(22) Date of filing: 15.11.2017
(51) Int. Cl.: C08G 18/50, C08G 18/66, C08G 18/76, C08G 18/10, C08G 18/38, C09J 175/04

(54) **TWO-COMPONENT SOLVENTLESS ADHESIVE COMPOSITIONS**
LÖSEMITTELFREIE ZWEIKOMPONENTENKLEBSTOFFZUSAMMENSETZUNG
COMPOSITIONS ADHÉSIVES SANS SOLVANT À DEUX COMPOSANTS

(30) Priority: 27.01.2017 US 201762451304 P
(43) Date of publication of application: 04.12.2019
(73) Proprietor: Dow Global Technologies LLC, Midland, MI 48674 (US)
(72) Inventor: WU, Jie, Lake Jackson, TX 77566 (US); XIE, Rui, Pearland, TX 77584 (US); SEHANOBISH, Kalyan, Midland, MI48674 (US)
(74) Representative: Boult Wade Tennant LLP
(86) International application number: PCT/US2017/061803
(87) International publication number: WO 2018/140116

(56) References cited:
- WO-A1-2015/168670
- DE-A1-102007 062 529
- US-A1- 2016 090 515

## Description

### Reference to Related Applications

The present application claims the benefit of U.S. Provisional Application No. 62/451,304, filed on January 27, 2017.

### Field of the Disclosure

The instant disclosure relates to solventless adhesive compositions. More particularly, the disclosure relates to two-component solventless polyurethane adhesive compositions for use in laminated structures. The disclosed adhesive compositions comprise amine-initiated polyols and phosphate ester polyols providing for laminate structures having improved conversion efficiency and which are suitable for use in high-performance food packaging applications (*e.g*., boil-in-bag applications).

In some embodiments, the adhesive compositions exhibit high reactivity and, thus, are formulated to be applied to two substrates independently which are then brought together to mix and react the adhesive composition. In particular, one component of the adhesive composition is configured to be uniformly applied to a surface of a first substrate and the other component of the adhesive composition is configured to be applied to a surface of a second substrate. The first and second substrates are subsequently brought together, thereby mixing and reacting the two components to form an adhesive between the first and second substrates. In this way, the adhesive can then be cured, thereby bonding the first and second substrates.

### Background of the Disclosure

US 2016/090515 relates to the field of two-pack polyurethane compositions and to their use, more particularly as adhesive or as grouting compound. WO 2015/168670 relates to the field of two-pack polyurethane compositions and to their use, more particularly as adhesive or as grouting compound. DE 102007062529 relates to a 2-component adhesive based on polyurethanes which has a high adhesive strength.

Adhesive compositions are useful for a wide variety of purposes. For instance, adhesive compositions are used to bond together substrates such as polyethylene, polypropylene, polyester, polyamide, metal, paper, or cellophane to form composite films, *i.e.*, laminates. The use of adhesives in different end-use applications is generally known.

For example, adhesives can be used in the manufacture of film/film and film/foil laminates used in the packaging industry, especially for food packaging. Adhesives used in laminating applications, or "laminating adhesives," can be generally placed into three categories: solvent-based, water-based, and solventless. The performance of an adhesive varies by category and by the application in which the adhesive is applied.

Solventless laminating adhesives can be applied up to one hundred percent solids without either organic solvent or an aqueous carrier. Because no organic solvent or water has to be dried from the adhesive upon application, these adhesives can be run at high line speeds and are preferable in applications requiring quick adhesive application. Solvent and water-based laminating adhesives are limited by the rate at which the solvent or water can be effectively dried and removed from the laminate structure after application of the adhesive. For environmental, health, and safety reasons, laminating adhesives are preferably aqueous or solventless. However, solventless adhesives often encounter issues such as short pot life, low initial bond, slow bond development, slow primary aromatic amine ("PAA") and isocyanate ("NCO") decay, low adhesion to metal surfaces, and poor chemical and thermal resistance, particularly in high-performance applications such as boil-in-bag applications.

Within the category of solventless laminating adhesives, there are many varieties. One particular variety includes premixed, two-component, polyurethane-based laminating adhesives. Typically, a two-component polyurethane-based laminating adhesive includes a first component comprising an isocyanate-containing prepolymer and/or a polyisocyanate and a second component comprising a polyol. The prepolymer can be obtained by the reaction of excess isocyanate with a polyether and/or polyester containing two or more hydroxyl groups per molecule. The second component comprises a polyether and/or polyester initiated with two or more hydroxyl groups per molecule. The two components are combined in a predetermined ratio, or "premixed," and then applied on a first substrate ("carrier web"). The first substrate is then brought together with a second substrate to form a laminate structure.

Additional layers of substrate can be added to the structure with additional layers of adhesive composition located between each successive substrate. The adhesive is then cured, either at room temperature or elevated temperature, thereby bonding the substrates together.

Further processing of the laminate structure depends upon the curing speed of the adhesive. The curing speed of the adhesive is indicated by the time in which the mechanical bond between the laminated substrates takes to become sufficient to allow for further processing and the laminate is in compliance with applicable regulations (e.g., food contact regulations). Slow curing speed results in lower conversion efficiency. Premixed two-component solventless laminating adhesives, compared to traditional solvent-containing adhesives, exhibit weak initial bonds and slow curing speed. The general trend in the converting industry is towards faster curing laminating adhesives. Faster curing improves the operational efficiency for converters. Specifically, quickly moving finished products out of a warehouse increases production capacity and flexibility for handling last minute orders (*e*.*g*., retailer promotional campaigns). In order to increase operational efficiency, an adhesive composition with a reactivity much higher than existing adhesive compositions should be used to form laminates. However, such an adhesive composition would provide a challenge for traditional adhesive application technologies.

Accordingly, two-component solventless polyurethane-based laminating adhesive compositions with improved bond strength, faster curing speeds, and high-performance application capability are desirable.

### Summary of the Disclosure

In the first aspect of the invention there is provided the two-component solventless adhesive composition of claim 1. In a further aspect of the invention there is provided the laminate structure of claim 14. In a further aspect of the invention there is provided the method of claim 15.

Two-component solventless polyurethane adhesive compositions are disclosed. The solventless adhesive composition includes an isocyanate component including an isocyanate. The solventless adhesive composition further includes an isocyanate-reactive component including a highly-reactive amine-initiated polyol comprising two or more primary hydroxyl groups and a backbone incorporating tertiary amines. The isocyanate-reactive component further includes a phosphate ester polyol. In some embodiments, the isocyanate can be selected from the group consisting of an aliphatic polyisocyanate, a cycloaliphatic polyisocyanate, an aromatic polyisocyanate, and combinations of two or more thereof. In some embodiments, the amine-initiated polyol can comprise a functionality of from 2 to 12, a hydroxyl number of from 5 to 1,830, and a molecular weight of from 200 to 20,000. In some embodiments, the phosphate ester polyol is a reaction product of a polyol and a polyphosphoric acid. The isocyanate-reactive component can further include one or more non-amine-initiated polyols.

The disclosed adhesive compositions exhibit fast curing rates and enhanced performance relative to existing two-component solventless adhesive compositions. As a result, laminated structures comprising the adhesive compositions can be slit within as little as two hours after lamination and delivered within two days to a customer. Laminates comprising existing general purpose adhesive compositions typically require two to three days from lamination for slitting and five to seven days for delivery. Accordingly, the process efficiencies are greatly improved using the disclosed adhesive compositions. In addition, the operating window of the disclosed adhesive compositions is indefinite compared to a twenty to thirty minute pot-life for existing general purpose adhesives. This is because the pot-life of the disclosed adhesive compositions is completely decoupled from the curing process, as will be discussed below.

Because the disclosed adhesive compositions are formulated to be more highly reactive and exhibit faster curing rates than existing adhesive compositions, they are not ideally suited for use with existing adhesive application apparatuses. This is because the two components react very quickly, causing the adhesive to gel and be unfit for application to a substrate. For this reason, the disclosed adhesive compositions are formulated such that the isocyanate and isocyanate-reactive components are applied separately on two different substrates, instead of being premixed and applied on a carrier web.

In particular, the disclosed adhesive compositions are formulated such the isocyanate component can be uniformly applied to a surface of a first substrate and the isocyanate-reactive component can be applied to a surface of a second substrate. The surface of the first substrate is then brought into contact with the surface of the second substrate to mix and react the two components, thereby forming a laminate. The adhesive composition is then curable.

### Detailed Description of the Disclosure

The two-component solventless adhesive composition according to this disclosure comprises an isocyanate component and an isocyanate-reactive component.

### Isocyanate Component

The isocyanate component comprises an isocyanate. The isocyanate can be selected from the group consisting of a monomeric isocyanate, a polymeric isocyanate, a prepolymeric isocyanate, and combinations of two or more thereof. As used herein, a prepolymeric isocyanate is the reaction product of reactants comprising an isocyanate and a polyol, for instance a polyester polyol. The "prepolymeric isocyanate" can be a polyisocyanate itself.

In some embodiments, the isocyanate comprises a functionality of from 1.5 to 10, or from 1.8 to 5, or from 2 to 3. As used with respect to the isocyanate component, "functionality" refers to the number of hydroxyl-reactive sites per molecule. Compounds having isocyanate groups, such as the isocyanate component, may be characterized by the parameter "%NCO," which is the amount of isocyanate groups by weight based on the weight of the compound. The parameter %NCO is measured by the method of ASTM D 2572-97 (2010). In some embodiments, the isocyanate component has a %NCO of at least 3%, or at least 6%, or at least 10%. In some embodiments, the isocyanate component has a %NCO not to exceed 25%, or 18%, or 14%.

In some embodiments, the isocyanate component comprises a free monomer content of from 0 to 50%, or from 5 to 40%, or from 10 to 30%. In some embodiments, the isocyanate component comprises a molecular weight of from 200 to 3,000 g/mol, or from 300 to 2,000 g/mol, or from 500 to 1,000 g/mol. In some embodiments, the isocyanate component has viscosity at 25°C of from 300 to 40,000 mPa-s, or from 500 to 20,000 mPa-s, or from 1,000 to 10,000 mPa-s, as measured by the method of ASTM D2196.

In some embodiments, the isocyanate of the isocyanate component can be selected from the group consisting of an aliphatic polyisocyanate, a cycloaliphatic polyisocyanate, an aromatic polyisocyanate, and combinations of two or more thereof. An "aromatic polyisocyanate" is an isocyanate that contains one or more aromatic rings. An "aliphatic polyisocyanate" contains no aromatic rings. A "cycloaliphatic polyisocyanate" is a subset of aliphatic polyisocyanates, wherein the chemical chain is ring-structured.

Examples of isocyanates suitable for use according to the disclosure include isomers of hexamethylene diisocyanate ("HDI"), isomers of isophorone diisocyanate ("IPDI"), isomers of xylene diisocyanate ("XDI"), isomers of methylene diphenyl diisocyanate ("MDI"), such as 4,4-MDI, 2,2-MDI and 2,4-MDI, isomers of toluene-diisocyanate ("TDI") such as 2,4-TDI, 2,6-TDI, isomers of naphthalene-diisocyanate ("NDI") such as 1,5-NDI, isomers of norbornane diisocyanate ("NBDI"), isomers of tetramethylxylylene diisocyanate ("TMXDI"), and combinations of two or more thereof. Preferred are isomers of MDI, particularly a mixture of 4,4-MDI and 2,4-MDI (*i.e.*, liquid MDI) or 4,4-MDI (*i.e.*, solid MDI).

In some embodiments, the amount of the isocyanate in the isocyanate component is, by weight based on the weight of the isocyanate component, at least 40 wt%, or at least 70 wt%, or at least 90 wt%. In some embodiments, the amount of the isocyanate in the isocyanate component is, by weight based on the weight of the isocyanate component, not to exceed 100 wt%, or not to exceed 95 wt%, or not to exceed 90 wt%. In some embodiments, the amount of the isocyanate in the isocyanate component is, by weight based on the weight of the isocyanate component, is from 40 to 100 wt%.

The isocyanate component can further comprise other constituents commonly known to those of ordinary skill in the art.

### Isocyanate-reactive component

The solventless adhesive composition further comprises an isocyanate-reactive component comprising a highly-reactive amine-initiated polyol. The amine-initiated polyol comprises primary hydroxyl groups and a backbone incorporating at least one tertiary amine. In some embodiments, the isocyanate-reactive component can also comprise another type of polyol which is a non-amine-initiated polyol. For instance, the isocyanate-reactive component can comprise at least one selected from the group consisting of a polyester polyol, a polyether polyol, a polycarbonate polyol, a polyacrylate polyol, a polycaprolactone polyol, a polyolefin polyol, a natural oil polyol, and combinations of two or more thereof. Each polyol type may include one kind of polyol. Alternatively, each polyol type may include mixtures of different kinds of polyols. In some embodiments, one polyol type may be one kind of polyol whereas the other polyol type may be a mixture of different kinds of polyols.

The amine-initiated polyol comprises primary hydroxyl groups and a backbone incorporating at least one tertiary amine. In some embodiments, the amine-initiated polyol has the chemical structure of I: 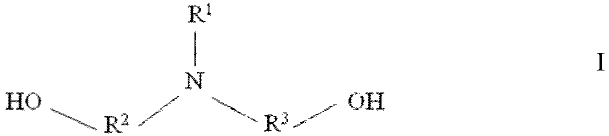 wherein R¹, R², and R³ are each independently a linear or branched alkyl group. For instance, can each independently be a C₁-C₆ linear or branched alkyl group. In some embodiments, the amine-initiated polyol comprises tertiary amines and secondary amines.

In some embodiments, the amine-initiated polyol comprises a functionality of from 2 to 12, or from 3 to 10, or from 4 to 8. As used with respect to the isocyanate-reactive component, "functionality" refers to the number of isocyanate reactive sites per molecule. In some embodiments, the amine-initiated polyol comprises a hydroxyl number of from 5 to 1,830, or from 20 to 100, or from 31 to 40. As used with respect to the isocyanate-reactive component, "hydroxyl number" is a measure of the amount of reactive hydroxyl groups available for reaction. This number is determined in a wet analytical method and is reported as the number of milligrams of potassium hydroxide equivalent to the hydroxyl groups found in one gram of the sample. The most commonly used methods to determine hydroxyl number are described in ASTM D 4274 D. In some embodiments, the amine-initiated polyol comprises a viscosity at 25°C of from 500 to 30,000 mPa-s, or from 1,000 to 15,000 mPa-s, or from 1,500 to 10,000 mPa-s.

Amine-initiated polyols suitable for use according to this disclosure are made by alkoxylating one or more amine initiators with one or more alkylene oxides.

In some embodiments, the amount of the amine-initiated polyol in the isocyanate-reactive component is, by weight based on the weight of the isocyanate-reactive component, at least 0.2 wt%, or at least 1 wt%, or at least 5 wt%. In some embodiments, the amount of the amine-initiated polyol in the isocyanate-reactive component is, by weight based on the weight of the isocyanate-reactive component, not to exceed 30 wt%, or not to exceed 15 wt%, or not to exceed 10 wt%. In some embodiments, the amount of the amine-initiated polyol in the isocyanate-reactive component is, by weight based on the weight of the isocyanate-reactive component, from 0.2 to 30 wt%.

In some embodiments, a non-amine-initiated polyol may optionally be included in the isocyanate-reactive component. Examples of suitable non-amine-initiated polyols include a polyester polyol, a polyether polyol, a polycarbonate polyol, a polyacrylate polyol, a polycaprolactone polyol, a polyolefin polyol, a natural oil polyol, and combinations of two or more thereof. In some embodiments, the non-amine-initiated polyol has viscosity at 25°C of from 30 to 40,000 mPa-s, or from 50 to 30,000 mPa-s, or from 70 to 20,000 mPa-s, as measured by the method of ASTM D2196. In some embodiments, the non-amine-initiated polyol has viscosity of 100 to 10,000 mPa-s at 25°C, as measured by the method of ASTM D2196. In some embodiments, the non-amine-initiated polyol is solid at 25°C.

In some embodiments, the amount of the non-amine-initiated polyol in the isocyanate-reactive component is at least 0 wt%, or at least 5 wt%, or at least 10 wt%. In some embodiments, the amount of the non-amine-initiated polyol in the isocyanate-reactive component is not to exceed 98 wt%, or not to exceed 90 wt%, or not to exceed 70 wt%.

The isocyanate-reactive component further comprises a phosphate ester polyol. In some embodiments, the phosphate ester polyol is made from a tri-functional propylene glycol, a polyphosphoric acid, and a polyisocyanate. Commercially available examples of the tri-functional propylene glycol suitable for use according to this disclosure include products sold under the trade names VORANOL^{™} CP-450, VORANOL^{™} CP-260, VORANOL^{™} CP-755, and VORANOL^{™} CP-1055, each available from The Dow Chemical Company.

In some embodiments, the phosphate ester polyol has a phosphoric acid content of less than 4 weight percent based on the weight of the phosphate ester polyol, or a phosphoric acid content of from 0 to 3 weight percent based on the weight of the phosphate ester polyol, or a phosphoric acid content of from 1.5 to 2.5 weight percent based on the weight of the phosphate ester polyol. In some embodiments, the phosphate ester polyol has a viscosity less than 40,000 mPa-s (cps) at 25°C, or less than 30,000 mPa-s (cps) at 25°C, as measured by the method of ASTM D2196. In some embodiments, the phosphate ester polyol has a hydroxyl equivalent weight less than 330 g/mol. In some embodiments, the phosphate ester polyol has from 0 to 100 weight percent, based on the weight of the phosphate ester polyol, of a tri-functional polyether polyol having an equivalent weight less than 2,000 g/mol.

The mix ratio of the isocyanate component to the isocyanate-reactive component, by weight, is controlled by adjusting the coating weight of each component to its respective substrate. In some embodiments, the mix ratio of the isocyanate component to the isocyanate-reactive component in the final adhesive composition can be 100:100, or 100:90, or 100:80. The disclosed adhesive compositions are more forgiving than traditional adhesives and can accommodate some coating weight error (*e*.*g*., up to about 10% coating weight error).

In some embodiments, one or more additives can optionally be included in the adhesive composition. Examples of such additives include tackifiers, plasticizers, rheology modifiers, adhesion promoters, antioxidants, fillers, colorants, surfactants, defoamers, wetting agents, leveling agents, solvents, and combinations of two or more thereof.

The isocyanate-reactive component can further comprise other constituents commonly known to those of ordinary skill in the art, *e*.*g*., additional polyols, isocyanates.

### Laminate Formation

It is contemplated that the isocyanate component and the isocyanate-reactive component of the disclosed solventless adhesive composition are formulated separately and stored until it is desired to form a laminate structure. Preferably, the isocyanate component and isocyanate-reactive component are in a liquid state at 25°C. Even if the components are solid at 25°C, it is acceptable to heat the components as necessary to put them into a liquid state.

A laminate comprising the disclosed adhesive compositions can be formed by applying the isocyanate and isocyanate-reactive components of the adhesive composition separately to two different substrates, such as two films. As used herein, a "film" is any structure that is 0.5 mm or less in one dimension and is 1 cm or more in both of the other two dimensions. A "polymer film" is a film that is made of a polymer or mixture of polymers. The composition of a polymer film is, typically, 80 percent by weight or more by weight one or more polymers.

For instance, a layer of the isocyanate component is applied to a surface of a first substrate. Preferably, the thickness of the layer of the isocyanate component on the first substrate is from 0.5 to 2.5 µm. A layer of the isocyanate-reactive component is applied to a surface of a second substrate. Preferably, the thickness of the layer of the isocyanate-reactive component on the second substrate is from 0.5 to 2.5 µm. By controlling the thickness of the layers applied to each substrate, the ratio of the components can be controlled.

The surfaces of the first and second substrates are then run through a device for applying external pressure to the first and second substrates, such as nip roller. Bringing the isocyanate component and isocyanate-reactive component together forms a curable adhesive mixture layer. When the surfaces of the first and second substrates are brought together, the thickness of the curable adhesive mixture layer is 1 to 5 µm. The isocyanate component and isocyanate-reactive component begin mixing and reacting when the first and second substrates are brought together and the components come into contact with each other. This marks the beginning of the curing process.

Further mixing and reacting is accomplished as the first and second substrates are run through various other rollers and ultimately to a rewind roller. The further mixing and reacting occurs as the first and second substrates pass through rollers because the substrates each take longer or shorter paths than the other substrate across each roller. In this way, the two substrates move relative to one another, mixing the components on the respective substrates. Arrangements of such rollers in an application apparatus are commonly known in the art. The curable mixture is then cured or allowed to cure.

Suitable substrates in the laminate structure include films such as paper, woven and nonwoven fabric, metal foil, polymer films, and metal-coated polymer films. Some films optionally have a surface on which an image is printed with ink which may be in contact with the adhesive composition. The substrates are layered to form a laminate structure, with an adhesive composition according to this disclosure adhering one or more of the substrates together.

Turning now to FIG. 1, a plot showing the reactivity profiles of an adhesive composition according to the present disclosure, *i*.*e*., comprising a disclosed amine-initiated polyol, and that of an adhesive composition without an amine-initiated polyol are shown. In FIG. 1, the adhesive composition comprising an amine-initiated polyol initially comprises a viscosity at 40°C of approximately 6,000 mPa-s at the time of lamination. Surprisingly, the viscosity increases rapidly to greater than 10,000 mPa-s in less than ten minutes after lamination. Conversely, the adhesive composition without an amine-initiated polyol initially comprises a viscosity at 40°C of approximately 1,000 mPa-s at the time of lamination. The viscosity does not exceed 10,000 mPa-s until approximately fifty minutes after lamination. This reactivity profile is typical of existing solventless adhesive compositions.

Accordingly, inclusion of a disclosed amine-initiated polyol in the isocyanate-reactive component of the adhesive composition provides for an adhesive composition with a significantly faster reactivity profile. Such adhesive compositions are particularly suited for lamination according to the methods disclosed herein.

### Examples of the Disclosure

The present disclosure will now be explained in further detail by describing examples illustrating the disclosed adhesive compositions and existing adhesive compositions (collectively, "the Examples").

The isocyanate-reactive components of the Examples are prepared using the raw materials identified in Table 1, below:

**Table 1: Raw Materials**

| Materials | Composition | Supplier | NCO% or Hydroxyl # |
|---|---|---|---|
| MOR-FREE^{™} L-PLUS | Aromatic polyisocyanate | The Dow Chemical Company | 12.2% |
| POLYISOCYANATE A | MDI polyester prepolymer | The Dow Chemical Company | 13.5% |
| | | | |
| SPECFLEX^{™} ACTIV 2306 | Amine-initiated polyol | The Dow Chemical Company | 37 |
| CR121-14 | Hydroxyl terminated components | The Dow Chemical Company | 147.7 |
| ISONATE^{™} 125M | Solid methylene diphenyl diisocyanate | The Dow Chemical Company | 33.5% |
| VORANOL^{™}CP450 | Hydroxyl terminated components | The Dow Chemical Company | 383 |
| VORANOL^{™}CP755 | Hydroxyl terminated components | The Dow Chemical Company | 237.5 |
| MOR-FREE^{™} 88-138 | Hydroxyl terminated components | The Dow Chemical Company | 290.8 |

The Examples are prepared according to the formulations, shown by component on a percent by weight basis, listed in Table 2 below:

**Table 2: OH Component Sample Formulations**

| Ingredient | Formulation (wt. % basis) | | | | |
|---|---|---|---|---|---|
| | CE1 | CE2 | CE3 | IE1 | IE2 |
| MOR-FREE^{™} L Plus 1 | 52.6 | | | | |
| POLYISOCYANATE A | | 50.5 | 49.5 | 52.2 | 52.6 |
| CR 121-14 | 47.4 | | | | |
| CR2E | | 49.5 | | | |
| CR2C | | | 50.5 | | |
| CR2D | | | | 47.8 | |
| CR2F | | | | | 47.4 |

### Illustrative Example 1 ("IE1")

**Table 3: Composition of CR2D**

| Materials | Percentage (wt. %) |
|---|---|
| VORANOL^{™} CP450 | 6.32 |
| VORANOL^{™} CP755 | 56.92 |
| ISONATE^{™} 125M | 9.76 |
| SPECFLEX^{™} ACTIV 2306 | 15 |
| MOR-FREE^{™} 88-138 | 12 |

VORANOL^{™} CP 450, VORANOL^{™} CP755 and ISONATE^{™} 125M are reacted in a reactor for 2 hours at 80°C under nitrogen purge to form OH-terminated polyether-based polyurethane. The synthesized polyether-based polyurethane is blended with SPECFLEX^{™} ACTIV 2306 and MOR-FREE^{™} 88-138 to form Coreactant 2D ("CR2D"). The detailed composition information of CR2D is listed in Table 3.

A polyurethane adhesive comprising about 52.2 wt.% POLYISOCYANATE A and 47.8 wt.% CR 2D is used to bond a foil/polyethylene ("PE") structure and a polyethylene terephthalate ("PET")/PE structure. The produced laminates are cured at 25°C and 50% relative humidity. The produced laminate samples are cut to 15 mm wide strips and their T-peel bond strength is evaluated on Thwing-Albert peel tester at 10.2 cm/min (4 inch/min). If one of the substrates is stretched or torn, the maximum force or force at break is recorded. The average of the force during the test is recorded if the two substrates are separated. The bond strength values are the average of at least three sample strips.

Boil-in-bag testing is conducted for the foil/PE laminates after the adhesive is fully cured. The pouches for the boil-in-bag testing have an interior size of 10.2 cm (4 inches) by 15.2 cm (6 inches) and are filled with 100 ml of 1:1:1 sauce (*i.e.*, equal parts of vinegar, corn oil, and ketchup). Subsequently, the pouches are placed in boiling water for 30 minutes. When complete, at least three 25.4 mm wide strips are cut from the area in contact with the boiling water and the bond strength of each strip is measured on Thwing-Albert peel tester at 25.4 cm/min (10 inch/min).

### Illustrative Example 2 ("IE2")

**Table 4: Composition of CR2F**

| Materials | Percentage (wt.%) |
|---|---|
| VORANOL^{™} CP755 | 52.7 |
| VORANOL^{™} CP450 | 9 |
| ISONATE^{™} 125M | 9.3 |
| SPECFLEX^{™} ACTIV 2306 | 17 |
| MOR-FREE^{™} 88-138 | 12 |

VORANOL^{™} CP 755 and ISONATE^{™} 125M are reacted in a reactor for 2 hours at 80°C under nitrogen purge to form OH-terminated polyether-based polyurethane. The synthesized polyether-based polyurethane is blended with VORANOL^{™} CP450, SPECFLEX^{™} ACTIV 2306, and MOR-FREE^{™} 88-138 to form CR2F. The detailed composition information of CR 2F is listed in Table 4.

A polyurethane adhesive comprising about 52.6 wt.% POLYISOCYANATE A and 47.4 wt.% CR2F is used to bond a foil/PE structure and a PET/PE structure. The produced laminates are cured at 25°C and 50% relative humidity. The laminate samples are cut to 15 mm wide strips and their T-peel bond strength is evaluated on Thwing-Albert peel tester at 10.2 cm/min (4 inch/min). If one of the substrates is stretched or torn, the maximum force or force at break is recorded. The average of the force during the test is recorded if the two substrates are separated. The bond strength values are the average of at least three sample strips.

Boil-in-bag testing is conducted for the foil/PE laminate after the adhesive is fully cured. The pouches for the boil-in-bag testing have an interior size of 10.2 cm (4 inches) by 15.2 cm (6 inches) and are filled with 100 ml of 1:1:1 sauce (*i.e.*, equal parts of vinegar, corn oil, and ketchup). Subsequently, the pouches are placed in the boiling water for 30 minutes. When complete, at least three 25.4 mm wide strips are cut from the area in contact with the boiling water and the bond strength of each strip is measured on Thwing-Albert peel tester at 25.4 cm/min (10 inch/min).

### Comparative Example 1 ("CE1")

A polyurethane adhesive comprising about 52.6 wt.% MOR-FREE^{™} L-PLUS and 47.4 wt.% CR 121-14 is used to bond a foil/PE structure and a PET/PE structure. The produced laminates are cured at 25°C and 50% relative humidity. The laminate samples are cut to 15 mm wide strips and their T-peel bond strength is evaluated on Thwing-Albert peel tester at 10.2 cm/min (4 inch/min). If one of the substrates is stretched or torn, the maximum force or force at break is recorded. The average of the force during the test is recorded if the two substrates are separated. The bond strength values are the average of at least three sample strips.

Boil-in-bag testing is conducted for the foil/PE laminate after the adhesive is fully cured. The pouches for the boil-in-bag testing have an interior size of 10.2 cm (4 inches) by 15.2 cm (6 inches) and are filled with 100 ml of 1:1:1 sauce (*i.e.*, equal parts of vinegar, corn oil, and ketchup). Subsequently, the pouches are placed in the boiling water for 30 minutes. When complete, at least three 25.4 mm wide strips are cut from the area in contact with the boiling water and the bond strength of each strip is measured on Thwing-Albert peel tester at 25.4 cm/min (10 inch/min).

### Comparative Example 2

**Table 5: Composition of CR2E**

| Materials | Percentage (wt. %) |
|---|---|
| VORANOL^{™} CP450 | 7.71 |
| VORANOL^{™} CP755 | 69.39 |
| ISONATE^{™} 125M | 11.90 |
| SPECFLEX^{™} ACTIV 2306 | 11 |

VORANOL^{™} CP 450, VORANOL^{™} CP755, and ISONATE^{™} 125M are reacted in a reactor for 2 hours at 80°C under nitrogen purge to form OH-terminated polyether-based polyurethane. The synthesized polyether-based polyurethane is blended with SPECFLEX^{™} ACTIV 2306 to form CR2E. The detailed composition information of CR2E is listed in Table 5.

A polyurethane adhesive comprising about 50.5 wt.% POLYISOCYANATE A and 49.5 wt.% CR2E is used to bond a foil/PE structure and a PET/PE structure. The produced laminates are cured at 25°C and 50% relative humidity. The laminate samples are cut to 15 mm wide strips and their T-peel bond strength is evaluated on Thwing-Albert peel tester at 10.2 cm (4 inch/min). If one of the substrates are stretched or torn, the maximum force or force at break is recorded. The average of the force during the test is recorded if the two substrates are separated. The bond strength values are the average of at least three sample strips.

Boil-in-bag testing is conducted for the foil/PE laminate after the adhesive is fully cured. The pouches for the boil-in-bag testing have an interior size of 10.2 cm (4 inches) by 15.2 cm (6 inches) and are filled with 100 ml of 1:1:1 sauce (*i.e.*, equal parts of vinegar, corn oil, and ketchup). Subsequently, they are placed in the boiling water for 30 minutes. When complete, at least three 25.4 mm wide strips are cut from the area in contact with the boiling water and the bond strength of each strip is measured on Thwing-Albert peel tester at 25.4 cm/min (10 inch/min).

### Comparative Example 3

**Table 6: Composition of CR2C**

| Materials | Percentage (wt. %) |
|---|---|
| VORANOL^{™} CP450 | 7.36 |
| VORANOL^{™} CP755 | 66.27 |
| ISONATE^{™} 125M | 11.36 |
| SPECFLEX^{™} ACTIV 2306 | 15 |

VORANOL^{™} CP 450, VORANOL^{™} CP755, and ISONATE^{™} 125M are reacted in a reactor for 2 hours at 80°C under nitrogen purge to form OH-terminated polyether-based polyurethane. The synthesized polyether-based polyurethane is blended with SPECFLEX^{™} ACTIV 2306 to form CR2C. The detailed composition information of CR2C is listed in Table 6.

A polyurethane adhesive comprising about 49.5 wt.% POLYISOCYANATE A and 50.5 wt.% CR2C is used to bond a foil/PE structure and a PET/PE structure. The produced laminates are cured at 25°C and 50% relative humidity. The laminate samples are cut to 15 mm wide strips and their T-peel bond strength is evaluated on Thwing-Albert peel tester at 10.2 cm/min (4 inch/min). If one of the substrates are stretched or torn, the maximum force or force at break is recorded. The average of the force during the test is recorded if the two substrates are separated. The bond strength values are the average of at least three sample strips.

Boil-in-bag testing is conducted for the Foil/PE laminate after the adhesive is fully cured. The pouches for the boil-in-bag testing have an interior size of 10.2 cm (4 inches) by 15.2 cm (6 inches) and are filled with 100 ml of 1:1:1 sauce (*i.e.*, equal parts of vinegar, corn oil, and ketchup). Subsequently, they are placed in the boiling water for 30 minutes. When complete, at least three 25.4 mm wide strips are cut from the area in contact with the boiling water and the bond strength of each strip is measured on Thwing-Albert peel tester at 25.4 cm/min (10 inch/min).

### Performance Results

**Table 7: Bond Strength Data of PET/PE Laminates**

| Adhesive | Bond Strength (N/15 mm)* | | | | | | | | | | | |
|---|---|---|---|---|---|---|---|---|---|---|---|---|
| | 0.5 hr | | 1 hr | | 1.5 hr | | 2 hr | | 4 hr | | 24 hr | |
| CE1 | 0.09 | AS | 0.39 | AS | 0.69 | AS | 2.08 | AS | 2.71 | AT | 8.38 | FT |
| CE2 | 0.10 | AS | 0.16 | AS | 0.37 | AS | 0.81 | AS | 3.23 | AT/FS | 10.46 | FT |
| CE3 | 0.10 | AS | 0.27 | AS | 1.07 | AS | 2.50 | AT | 6.97 | FS | 7.18 | FS |
| E1 | 0.10 | AS | 0.20 | AS | 0.17 | AS | 1.02 | AS | 3.82 | AT/FS | 9.94 | FT |
| E2 | 0.05 | AS | 0.16 | AS | 0.68 | AS | 0.76 | AS | 3.34 | AT | 8.42 | FS |

| | | | | | | | | | | | | |
|---|---|---|---|---|---|---|---|---|---|---|---|---|
| *AS: Adhesive split; AT: Adhesive transfer; FS: Film stretch; FT: Film Tear | | | | | | | | | | | | |

**Table 8: Bond Strength Data of Foil/PE Laminates**

| Adhesive | Bond Strength (N/15 mm)* | | | | | | | | | | | |
|---|---|---|---|---|---|---|---|---|---|---|---|---|
| | 0.5 hr | | 1 hr | | 1.5 hr | | 2 hr | | 4 hr | | 24 hr | |
| CE1 | 0.18 | AS | 0.84 | AS | 1.60 | AS | 2.10 | AT | 2.91 | AT | 2.50 | AT |
| CE2 | 0.18 | AS | 0.46 | AS | 0.94 | AS | 1.36 | AT | 2.79 | AT | 2.78 | AT |
| CE3 | 0.26 | AS | 0.84 | AS | 1.65 | AT | 1.97 | AT | 2.35 | AT | 2.04 | AT |
| E1 | 0.20 | AS | 0.35 | AS | 0.59 | AS | 1.38 | AT | 3.12 | AT | 4.55 | AT |
| E2 | 0.09 | AS | 0.41 | AS | 1.38 | AS | 1.90 | AT | 3.06 | AT | 2.89 | AT |

| | | | | | | | | | | | | |
|---|---|---|---|---|---|---|---|---|---|---|---|---|
| *AS: Adhesive split; AT: Adhesive transfer | | | | | | | | | | | | |

**Table 9: Bond Strength Data of Foil/PE Laminates**

| Adhesive | Bond Strength After Boil-In-Bag (g/inch)* | |
|---|---|---|
| CE1 | 0 | DL |
| CE2 | 0 | DL |
| CE3 | 0 | DL |
| E1 | 383±10 | AS |
| E2 | 386±23 | AS |

| | | |
|---|---|---|
| *AS: Adhesive split; DL: Delamination | | |

Table 7 and 8 illustrate that IE1 and IE2 have ultra-fast curing and bond strength development. For example, both IE1 and IE2 have bond strengths of above 1N/15mm after 2 hours curing. IE1 and IE2 exhibit higher dry bond after 24 hours curing in comparison to CE1 to CE3. After 1:1:1 boil-in-bag test, as shown in Table 9, the laminates from CE1 to CE3 all delaminated. In contrast, IE1 and IE2 still have the bond strength of about 151 and 152 g/cm (383 and 386 g/inch), respectively, showing excellent temperature and chemical resistance.

## Claims

1. A two-component solventless adhesive composition, comprising:
an isocyanate component comprising an isocyanate; and
an isocyanate-reactive component comprising:
an amine-initiated polyol comprising two or more primary hydroxyl groups and a backbone incorporating tertiary amines; and
a phosphate ester polyol.

2. The two-component solventless adhesive composition of claim 1, wherein the amine-initiated polyol comprises a functionality of from 2 to 12, a hydroxyl number of from 5 to 1,830, and a viscosity at 25°C of from 500 to 30,000 mPa-s.

3. The two-component solventless adhesive composition of claim 1, wherein the amine-initiated polyol comprises from 0.5 to 30 percent by weight of the isocyanate reactive component, based on the total weight of the isocyanate-reactive component.

4. The two-component solventless adhesive composition of claim 1, wherein the amine-initiated polyol has the structure I: 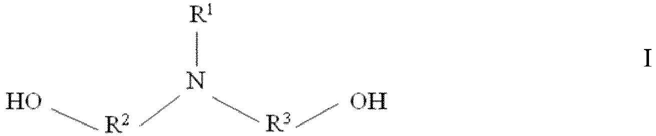 wherein R¹, R², and R³ are independently a linear or branched alkyl group.

5. The two-component solventless adhesive composition of claim 1, wherein the amine-initiated polyol is a reaction product of an alkylene oxide and an amine.

6. The two-component solventless adhesive composition of claim 5, wherein the amine is selected from the group consisting of toluene diamine, methylamine, ethylenediamine, diethylenetriamine, aniline, aminoethylethanolamine, bis-3-aminopropylmethylamine, propylenediamine, tetra-or hexamethyleneamine, triethanolamine, phenylenediamine, and combinations of two or more thereof.

7. The two-component solventless adhesive composition of claim 1, wherein the phosphate ester polyol comprises from 0.2 to 30 percent by weight of the isocyanate-reactive component, based on the total weight of the isocyanate-reactive component.

8. The two-component solventless adhesive composition of claim 1, wherein the phosphate ester polyol is a reaction product of a polyol and a polyphosphoric acid.

9. The two-component solventless adhesive composition of claim 1, wherein the phosphate ester polyol is made from a tri-functional propylene glycol, a polyphosphoric acid, and a polyisocyanate, the phosphate ester polyol having a phosphoric acid content of less than 3 weight percent based on the weight of the phosphate ester polyol, and a viscosity less than 40,000 cps at 25°C.

10. The two-component solventless adhesive composition of claim 1, further comprising an adhesion promoter.

11. The two-component solventless adhesive composition of claim 10, wherein the adhesion promoter is a coupling agent selected from the group consisting of a silane coupling agent, a titanate coupling agent, an aluminate coupling agent, and combinations of two or more thereof.

12. The two-component solventless adhesive composition of claim 10, wherein the adhesion promoter is selected from the group consisting of a coupling agent, an epoxy resin, a phosphoric acid, a polyphosphoric acid, a phosphate ester, and combinations of two or more thereof.

13. A laminate structure comprising the two-component solventless adhesive composition of claim 1.

14. A method for forming a laminate structure comprising the two-component solventless adhesive composition of claim 1, comprising:
uniformly applying an isocyanate component to a first substrate, the isocyanate component comprising an isocyanate;
uniformly applying a isocyanate-reactive component to a second substrate, the isocyanate-reactive component comprising:
an amine-initiated polyol comprising primary hydroxyl groups and a backbone incorporating tertiary amines; and
a phosphate ester polyol;
bringing the first and second substrates together, thereby mixing and reacting the isocyanate component and the isocyanate-reactive component to form an adhesive between the first and second substrates; and
curing the adhesive to bond the first and second substrates.

## Patentansprüche

1. Lösungsmittelfreie Zweikomponentenklebstoffzusammensetzung, umfassend:
eine Isocyanatkomponente, umfassend ein Isocyanat; und
eine Isocyanat-reaktive Komponente, umfassend:
ein Amin-initiiertes Polyol, umfassend zwei oder mehr primäre Hydroxylgruppen und ein Rückgrat, das tertiäre Amine enthält; und
ein Phosphatesterpolyol.

2. Lösungsmittelfreie Zweikomponentenklebstoffzusammensetzung nach Anspruch 1, wobei das Amin-initiierte Polyol eine Funktionalität von 2 bis 12, eine Hydroxylzahl von 5 bis 1.830 und eine Viskosität bei 25 °C von 500 bis 30.000 mPa-s umfasst.

3. Lösungsmittelfreie Zweikomponentenklebstoffzusammensetzung nach Anspruch 1, wobei das Amin-initiierte Polyol 0,5 bis 30 Gew.-% der Isocyanat-reaktiven Komponente umfasst, basierend auf dem Gesamtgewicht der Isocyanat-reaktiven Komponente.

4. Lösungsmittelfreie Zweikomponentenklebstoffzusammensetzung nach Anspruch 1, wobei das Amin-initiierte Polyol die Struktur I aufweist: 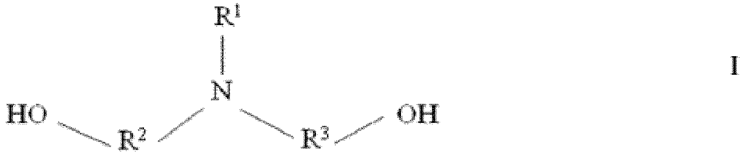 wobei R¹, R² und R³ unabhängig eine lineare oder verzweigte Alkylgruppe sind.

5. Lösungsmittelfreie Zweikomponentenklebstoffzusammensetzung nach Anspruch 1, wobei das Amin-initiierte Polyol ein Reaktionsprodukt eines Alkylenoxids und eines Amins ist.

6. Lösungsmittelfreie Zweikomponentenklebstoffzusammensetzung nach Anspruch 5, wobei das Amin aus der Gruppe ausgewählt ist, bestehend aus Toluoldiamin, Methylamin, Ethylendiamin, Diethylentriamin, Anilin, Aminoethylethanolamin, Bis-3-aminopropylmethylamin, Propylendiamin, Tetra- oder Hexamethyleneamin, Triethanolamin, Phenylendiamin und Kombinationen von zwei oder mehr davon.

7. Lösungsmittelfreie Zweikomponentenklebstoffzusammensetzung nach Anspruch 1, wobei das Phosphatesterpolyol 0,2 bis 30 Gew.-% der Isocyanat-reaktiven Komponente umfasst, basierend auf dem Gesamtgewicht der Isocyanat-reaktiven Komponente.

8. Lösungsmittelfreie Zweikomponentenklebstoffzusammensetzung nach Anspruch 1, wobei das Phosphatesterpolyol ein Reaktionsprodukt eines Polyols und einer Polyphosphorsäure ist.

9. Lösungsmittelfreie Zweikomponentenklebstoffzusammensetzung nach Anspruch 1, wobei das Phosphatesterpolyol aus einem dreifunktionellen Propylenglykol, einer Polyphosphorsäure und einem Polyisocyanat hergestellt ist, wobei das Phosphatesterpolyol einen Phosphorsäuregehalt von weniger als 3 Gew.-%, basierend auf dem Gewicht des Phosphatesterpolyols, und eine Viskosität von weniger als 40.000 cps bei 25 °C aufweist.

10. Lösungsmittelfreie Zweikomponentenklebstoffzusammensetzung nach Anspruch 1, ferner umfassend einen Haftvermittler.

11. Lösungsmittelfreie Zweikomponentenklebstoffzusammensetzung nach Anspruch 10, wobei der Haftvermittler ein Kopplungsmittel ist, das aus der Gruppe ausgewählt ist, bestehend aus einem Silan-Kopplungsmittel, einem Titanat-Kopplungsmittel, einem Aluminat-Kopplungsmittel und Kombinationen von zwei oder mehr davon.

12. Lösungsmittelfreie Zweikomponentenklebstoffzusammensetzung nach Anspruch 10, wobei der Haftvermittler aus der Gruppe ausgewählt ist, bestehend aus einem Kopplungsmittel, einem Epoxidharz, einer Phosphorsäure, einer Polyphosphorsäure, einem Phosphatester und Kombinationen von zwei oder mehr davon.

13. Laminatstruktur, umfassend die lösungsmittelfreie Zweikomponentenklebstoffzusammensetzung nach Anspruch 1.

14. Verfahren zum Ausbilden einer Laminatstruktur, umfassend die lösungsmittelfreie Zweikomponentenklebstoffzusammensetzung nach Anspruch 1, umfassend:
gleichmäßiges Aufbringen einer Isocyanatkomponente auf ein erstes Substrat, die Isocyanatkomponente umfassend ein Isocyanat;
gleichmäßiges Aufbringen einer Isocyanat-reaktiven Komponente auf ein zweites Substrat, die Isocyanat-reaktive Komponente umfassend:
ein Amin-initiiertes Polyol, umfassend primäre Hydroxylgruppen und ein Rückgrat, das tertiäre Amine enthält; und
ein Phosphatesterpolyol;
Zusammenbringen des ersten und des zweiten Substrats, wodurch die Isocyanatkomponente und die Isocyanat-reaktive Komponente gemischt und reagiert werden, um einen Klebstoff zwischen dem ersten und dem zweiten Substrat auszubilden; und
Aushärten des Klebstoffs, um das erste und das zweite Substrat zu verbinden.

## Revendications

1. Composition adhésive bicomposante sans solvant, comprenant :
un composant isocyanate comprenant un isocyanate ; et
un composant réactif avec un isocyanate comprenant :
un polyol initié par amine comprenant deux groupes hydroxyle primaire ou plus et un squelette incorporant des amines tertiaires ; et
un polyol d'ester de phosphate.

2. Composition adhésive bicomposante sans solvant selon la revendication 1, dans laquelle le polyol initié par amine comprend une fonctionnalité allant de 2 à 12, un indice d'hydroxyle allant de 5 à 1830, et une viscosité à 25 °C allant de 500 à 30 000 mPa s.

3. Composition adhésive bicomposante sans solvant selon la revendication 1, dans laquelle le polyol initié par amine constitue de 0,5 à 30 pour cent en poids du composant réactif avec un isocyanate, en fonction du poids total du composant réactif avec un isocyanate.

4. Composition adhésive bicomposante sans solvant selon la revendication 1, dans laquelle le polyol initié par amine a la structure I : 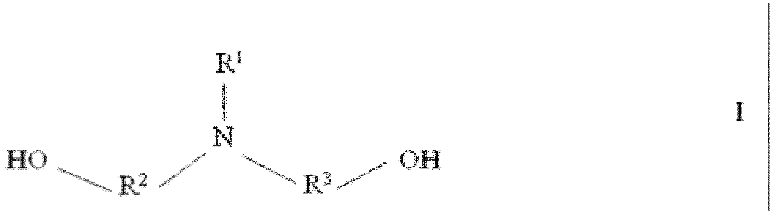 dans laquelle R¹, R² et R³ sont indépendamment un groupe alkyle linéaire ou ramifié.

5. Composition adhésive bicomposante sans solvant selon la revendication 1, dans laquelle le polyol initié par amine est un produit de réaction d'un oxyde d'alkylène et d'une amine.

6. Composition adhésive bicomposante sans solvant selon la revendication 5, dans laquelle l'amine est choisie dans le groupe constitué par toluènediamine, méthylamine, éthylènediamine, diéthylènetriamine, aniline, aminoéthyléthanolamine, bis-3-aminopropylméthylamine, propylènediamine, tétra- ou hexa-méthylèneamine, triéthanolamine, phénylènediamine, et des combinaisons de deux de ceux-ci ou plus.

7. Composition adhésive bicomposante sans solvant selon la revendication 1, dans laquelle le polyol d'ester de phosphate constitue de 0,2 à 30 pour cent en poids du composant réactif avec un isocyanate, en fonction du poids total du composant réactif avec un isocyanate.

8. Composition adhésive bicomposante sans solvant selon la revendication 1, dans laquelle le polyol d'ester de phosphate est un produit de réaction d'un polyol et d'un acide polyphosphorique.

9. Composition adhésive bicomposante sans solvant selon la revendication 1, dans laquelle le polyol d'ester de phosphate est fabriqué à partir d'un propylène glycol trifonctionnel, d'un acide polyphosphorique et d'un polyisocyanate, le polyol d'ester de phosphate ayant une teneur en acide phosphorique inférieure à 3 pour cent en poids en fonction du poids du polyol d'ester de phosphate, et une viscosité inférieure à 40 000 cP à 25 °C.

10. Composition adhésive bicomposante sans solvant selon la revendication 1, comprenant en outre un promoteur d'adhésion.

11. Composition adhésive bicomposante sans solvant selon la revendication 10, dans laquelle le promoteur d'adhésion est un agent de couplage choisi dans le groupe constitué par un agent de couplage silane, un agent de couplage titanate, un agent de couplage aluminate, et des combinaisons de deux de ceux-ci ou plus.

12. Composition adhésive bicomposante sans solvant selon la revendication 10, dans laquelle le promoteur d'adhésion est choisi dans le groupe constitué par un agent de couplage, une résine époxy, un acide phosphorique, un acide polyphosphorique, un ester de phosphate, et des combinaisons de deux de ceux-ci ou plus.

13. Structure stratifiée comprenant la composition adhésive bicomposante sans solvant selon la revendication 1.

14. Procédé permettant de former une structure stratifiée comprenant la composition adhésive bicomposante sans solvant selon la revendication 1, comprenant :
l'application uniforme d'un composant isocyanate sur un premier substrat, le composant isocyanate comprenant un isocyanate ;
l'application uniforme d'un composant réactif avec un isocyanate sur un second substrat, le composant réactif avec un isocyanate comprenant :
un polyol initié par amine comprenant des groupes hydroxyle primaire et un squelette incorporant des amines tertiaires ; et
un polyol d'ester de phosphate ;
la réunion des premier et second substrats, ce qui mélange et fait réagir le composant isocyanate et le composant réactif avec un isocyanate pour former un adhésif entre les premier et second substrats ; et
le durcissement de l'adhésif pour lier les premier et second substrats.
